# EUROPEAN PATENT APPLICATION

(11) **EP 3 096 044 A1**
(43) Date of publication of application: **23.11.2016**
(21) Application number: 14869995.2
(22) Date of filing: 26.12.2014
(51) Int. Cl.: F16J 9/16, F02F 5/00

(54) **PISTON RING**

(30) Priority: 12.12.2013 JP 2013256792
(71) Applicant: Kabushiki Kaisha Riken, Tokyo 102-8202 (JP)
(72) Inventor: OKAZAKI, Fumihiro, Kashiwazaki-shi Niigata 945-8555 (JP); FUJITA, Masaaki, Kashiwazaki-shi Niigata 945-8555 (JP)
(74) Representative: Luten, Martin Haaije
(86) International application number: PCT/JP2014/084528
(87) International publication number: WO 2015/088047

(57) **Abstract**

There is provided a piston ring capable of excellently securing both strength and sealing ability of a joint. In a joint 3, a side face 2a side of a body 2 has a first protruding part 13 from one butt end 11 toward the other butt end 12 and a first reception part 14 that receives the first protruding part 13 in the other butt end 12, and a side face 2b side of the body 2 has a second protruding part 15 from the other butt end 12 toward the one butt end 11 and a second reception part 16 that receives the second protruding part 15 in the one butt end 11. An inside surface 2c side of the body 2 has a first male part 21 from the second protruding part 15 toward the second reception part 16 and a first female part 22 that receives the first male part 21 in the second reception part 16, and an peripheral surface 2d side of the body 2 has a second male part 23 from the second reception part 16 toward the second protruding part 15 and a second female part 24 that receives the second male part 23 in the second protruding part 15.

## Description

### Technical Field

The present invention relates to a piston ring used for an internal combustion engine.

### Background Art

A piston ring used for an internal combustion engine of a vehicle or the like is provided, for example, in a ring groove on a piston outer circumferential face, and has a prevention function of blowby gas from a combustion chamber side to a crank chamber side by an peripheral surface of the piston ring coming into sliding contact with a bore inner circumferential face and one lateral side of the piston ring coming into contact with a lateral face of the ring groove. Since such a piston ring is in a split ring shape having a joint for convenience of its attachment into the ring groove, it has been a problem to suppress the blowby gas in the joint.

Against such a problem, for example, with a piston ring disclosed in Patent Literature 1, a special joint called double angle joint is formed in a metal-made piston ring, and thereby, an area of gas leakage in the joint is reduced. Moreover, with a piston ring disclosed in Patent Literature 2, one in which a step-like joint is formed in a synthetic resin-made piston ring is disclosed. Moreover, in Patent Literature 3, one in which a triple step-like joint is formed as a sealing ring used for oil sealing in a transmission or the like is disclosed.

### Citation List

### Patent Literature

Patent Literature 1: Japanese Unexamined Utility Model Publication No. S59-126158
Patent Literature 2: Japanese Unexamined Utility Model Publication No. H4-41153
Patent Literature 3: Japanese Unexamined Patent Publication No. 2003-1584

### Summary of Invention

### Technical Problem

Processing of the joint structure as in Patent Literature 1 above is complex and there are problems of processing accuracy and processing costs. Moreover, since an area of a distal end face of a projection part protruding from an butt end is small, there is a problem that the projection part tends to break when load is exerted on the projection part. Moreover, as to the joint structures in Patent Literature 2 and Patent Literature 3, it can be considered that processing with use of a resin material facilitates their production. Nevertheless, there is a problem that with a resin-made piston ring, heat resistance is hardly sufficiently obtained as compared with a metal-made piston ring.

The present invention is devised to solve the aforementioned problems and an object thereof is to provide a piston ring capable of excellently securing both strength and sealing ability of a joint.

### Solution to Problem

There is provided a piston ring according to one aspect of the present invention, comprising: an annular body; and a joint formed in the body, wherein in the joint, a first protruding part that protrudes from one butt end toward the other butt end and a first reception part that receives the first protruding part in the other butt end are provided on one side face side of the body, a second protruding part that protrudes from the other butt end toward the one butt end and a second reception part that receives the second protruding part in the one butt end are provided on the other side face side of the body, a first male part that protrudes from the second protruding part toward the second reception part and a first female part that receives the first male part in the second reception part are provided on an inside surface side of the body, and a second male part that protrudes from the second reception part toward the second protruding part and a second female part that receives the second male part in the second protruding part are provided on an peripheral surface side of the body.

With this piston ring, a crank is formed by a position where the first protruding part and the first reception part oppose each other on the one side face side of the body and a position where the second protruding part and the second reception part oppose each other on the other side face side of the body, the positions being displaced from each other. Accordingly, gas passing through in the width direction of the piston ring can be shut off by the first protruding part and the second protruding part mated with each other in the width direction of the body in use of the piston ring and by the crank closed. Moreover, with the piston ring, a crank is formed by a position where the first male part and the first female part oppose each other on the inside surface side of the body and a position where the second male part and the second female part oppose each other on the peripheral surface side of the body displaced from each other. In this crank, the opposite face to the second male part in the first male part and the opposite face to the first male part in the second male part hardly suffer influence of thermal expansion, and influence of abrasion in use of the piston ring is also small. Hence, the distance between the opposite faces can be maintained to be small. Accordingly, gas having sneaked into the inside surface side of the piston ring can be suppressed from passing through to the peripheral surface side. Furthermore, with the piston ring, sectional areas of the first protruding part on the one side face side of the body and the second protruding part on the other side face side of the body can be sufficiently secured. In addition to this, since the first protruding part extends more than the first female part and the second male part on the second reception part side, strength of the joint can be sufficiently secured.

Moreover, it is preferable that the mating face for the first protruding part in the second protruding part be inclined with respect to the mating face for the second protruding part in the first protruding part in such a way that a width of the second protruding part narrows toward the distal end side. In this case, a length of the crank formed by the first protruding part and the second protruding part can be sufficiently secured. Hence, pressure loss in the crank becomes large, which can further securely suppress the gas from passing through in the width direction of the piston ring. Moreover, since a basal end part of the second protruding part becomes thick, strength of the second protruding part can be more secured.

Moreover, it is preferable that the opposite face to the first protruding part in the first reception part be inclined with respect to the opposite face to the first reception part in the first protruding part. In this way, contact between the opposite faces can be prevented and abrasion of the first protruding part can be suppressed.

Moreover, it is preferable that the opposite face to the second reception part in the second protruding part be inclined with respect to the opposite face to the second protruding part in the second reception part. In this way, contact between the opposite faces can be prevented and abrasion of the second protruding part can be suppressed.

Moreover, it is preferable that the body be formed of metal. In this way, heat resistance of the piston ring can be sufficiently secured.

### Advantageous Effects of Invention

In accordance with the piston ring according to the present invention, both strength and sealing ability of the joint can be excellently secured.

### Brief Description of Drawings

[Figure 1] Figure 1 is a perspective view showing an embodiment of a piston ring according to one aspect of the present invention.
[Figure 2] Figure 2 is an expanded perspective view of the essential part of a joint of the piston ring shown in Figure 1 which part is presented from one side face side.
[Figure 3] Figure 3 is an expanded perspective view of the essential part of the joint of the piston ring shown in Figure 1 which part is presented from the other side face side.
[Figure 4] Figure 4 is an expanded view of the essential part of the joint of the piston ring shown in Figure 1 as seen from a peripheral surface side.
[Figure 5] Figure 5 is an expanded view of the essential part of the joint of the piston ring shown in Figure 1 as seen from the other side face side.
[Figure 6] Figure 6 is an expanded view of the essential part of a joint of a piston ring according to a modification as seen from the peripheral surface side.
[Figure 7] Figure 7 is an expanded view of the essential part of a joint of a piston ring according to another modification as seen from the peripheral surface side.

### Description of Embodiments

Hereafter, preferred embodiments of a piston ring according to one aspect of the present invention are described in detail with reference to the drawings.

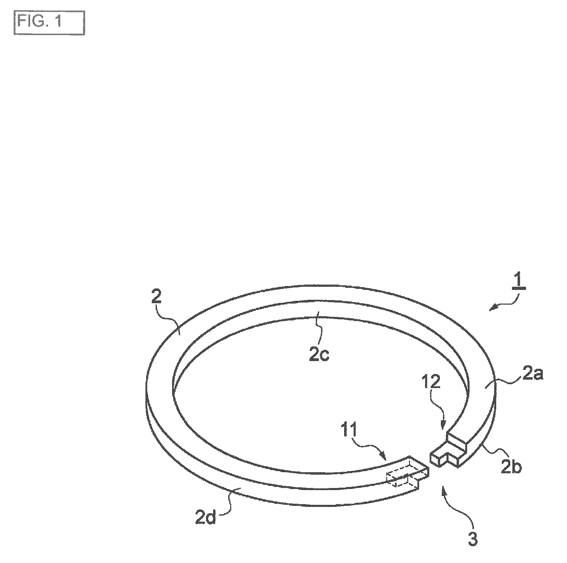

Figure 1 is a perspective view showing an embodiment of the piston ring according to one aspect of the present invention. A piston ring 1 shown in the figure is provided in a ring groove on a piston outer circumferential face, for example, in an internal combustion engine of a vehicle, and is configured to achieve a prevention function of blowby gas from a combustion chamber side to a crank chamber side by an peripheral surface 2d of the piston ring 1 coming into sliding contact with a bore inner circumferential face and a side face 2b side of the piston ring 1 coming into contact with a lateral face of the ring groove to be a sealing face.

The piston ring 1 includes an annular body 2 and a joint 3 formed in a part of the body 2. The body 2 forms a substantially rectangular sectional shape by a side face (one side face side) 2a and the side face (the other side face side) 2b which are end faces in a width direction thereof and an inside surface 2c and the peripheral surface 2d which are end faces in a thickness direction thereof, which shape has long sides in the thickness direction and short sides in the width direction. The body 2 is formed to have sufficient strength, heat resistance and elasticity, for example, with cast iron or steel material containing a plurality of metal elements. Moreover, onto the surface of the body 2, surface reforming is applied, for example, with a hard chromium plating layer, a nitride layer of chromium, a nitride layer of iron or the like to achieve improvement of abrasion resistance of the body 2.

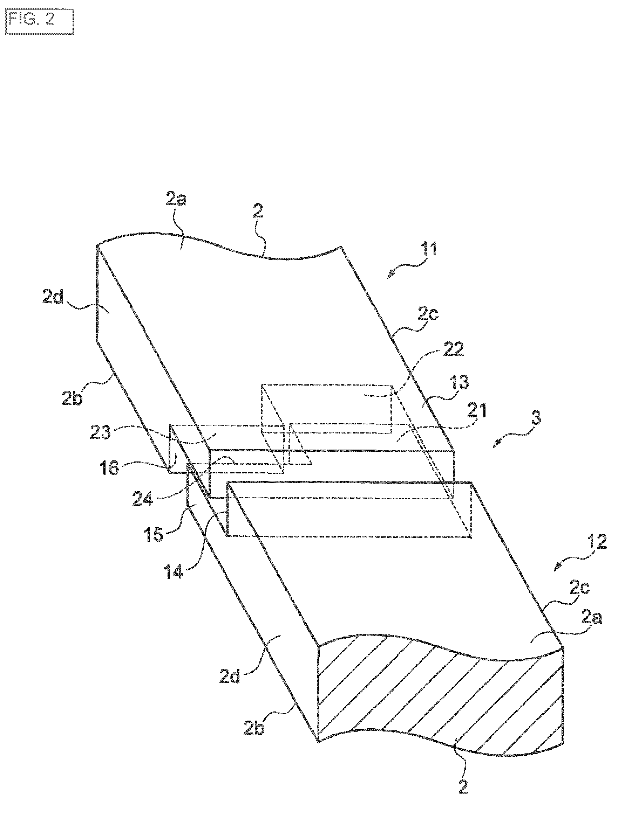

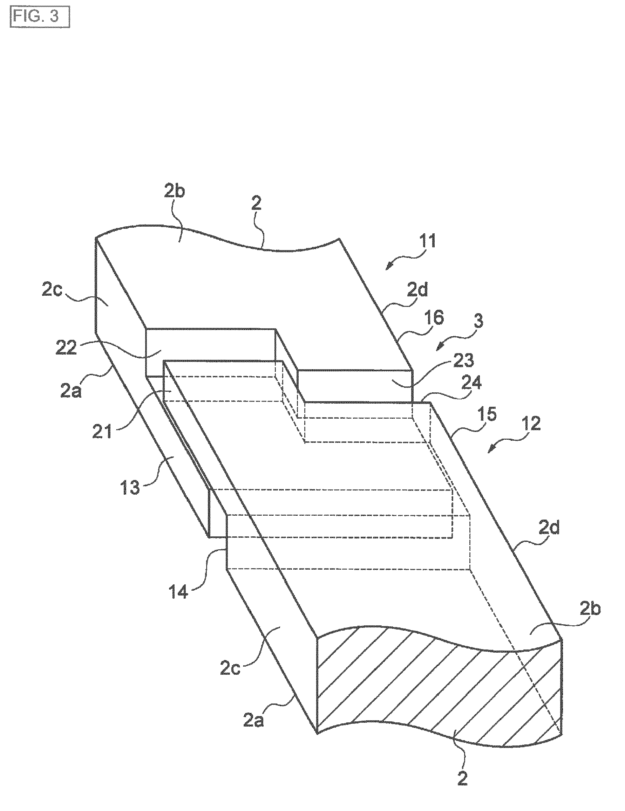

Figure 2 is an expanded perspective view of the essential part of the joint 3 in the piston ring 1 shown in Figure 1 which part is presented from the side face 2a side. Figure 3 is a view showing the joint 3 in the piston ring 1 shown in Figure 1 which part is presented from the side face 2b side. As shown in Figure 2 and Figure 3, the joint 3 is a break formed in a part of the body 2 and is provided for the purpose of securing attachment ability in attaching the piston ring 1 into the ring groove on the piston outer circumferential face. In the joint 3, one butt end 11 and the other butt end 12 oppose each other at a predetermined distance in the state before attaching the piston ring 1 into the ring groove.

In the joint 3, as shown in Figure 2, on the side face 2a side of the body 2, a first protruding part 13 that protrudes from the one butt end 11 toward the other butt end 12 and a first reception part 14 that receives the first protruding part 13 in the other butt end 12 are provided. Moreover, on the side face 2b side of the body 2, a second protruding part 15 that protrudes from the other butt end 12 toward the one butt end 11 and a second reception part 16 that receives the second protruding part 15 in the one butt end 11 are provided.

More specifically, in the first protruding part 13, a substantially half portion of the side face 2a side of the body 2 protrudes from the one butt end 11 into a substantially rectangular sectional shape, and in the first reception part 14, a substantially half portion of the side face 2a side of the body 2 is cut out in the other butt end 12 into a substantially rectangular sectional shape correspondingly to the shape of the first protruding part 13.

Likewise, in the second protruding part 15, a substantially half portion of the side face 2b side of the body 2 protrudes from the other butt end 12 into a substantially rectangular sectional shape, and in the second reception part 16, a substantially half portion of the side face 2b side of the body 2 is cut out in the one butt end 11 into a substantially rectangular sectional shape correspondingly to the shape of the second protruding part 15.

Furthermore, as shown in Figure 3, on the side face 2b side of the body 2, a first male part 21 that protrudes from the second protruding part 15 toward the second reception part 16 and a first female part 22 that receives the first male part 21 in the second reception part 16 are provided on the inside surface 2c side of the body 2. Moreover, on the side face 2b side of the body 2, a second male part 23 that protrudes from the second reception part 16 toward the second protruding part 15 and a second female part 24 that receives the second male part 23 in the second protruding part 15 are provided on the peripheral surface 2d side of the body 2.

More specifically, in the first male part 21, a substantially half portion of the inside surface 2c side of the second protruding part 15 protrudes into a substantially rectangular sectional shape, and in the first female part 22, a substantially half portion of the inside surface 2c side of the second reception part 16 is cut out into a substantially rectangular sectional shape correspondingly to the shape of the first male part 21.

Likewise, in the second male part 23, a substantially half portion of the peripheral surface 2d side of the second reception part 16 protrudes into a substantially rectangular sectional shape, and in the second female part 24, a substantially half portion of the peripheral surface 2d side of the second protruding part 15 is cut out into a substantially rectangular sectional shape correspondingly to the shape of the second male part 23.

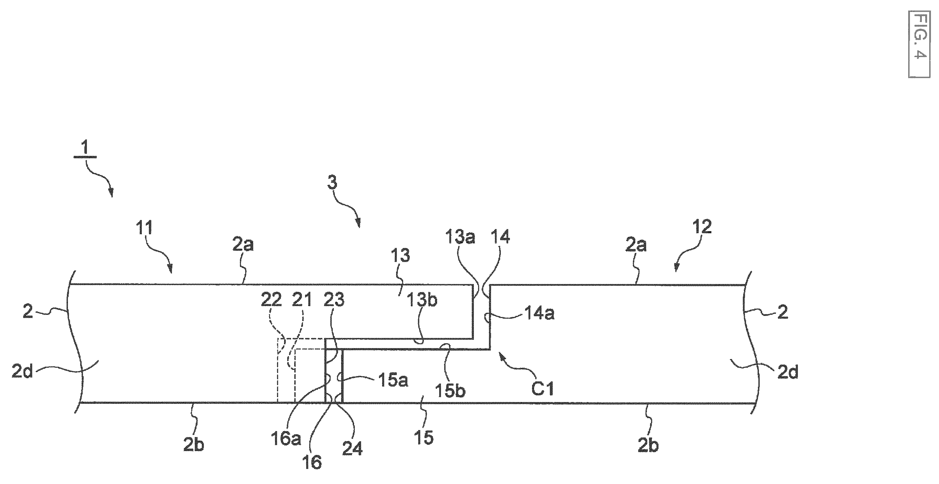

In the piston ring 1 having the configuration as above, a position where the first protruding part 13 and the first reception part 14 oppose each other on the side face 2a side of the body 2 and a position where the second protruding part 15 and the second reception part 16 oppose each other on the side face 2b side of the body 2 are displaced from each other in a circumferential direction of the body 2. In this way, in the case of seeing the joint 3 from the peripheral surface 2d side, as shown in Figure 4, a crank C1 is formed of an opposite face 13a to the first reception part 14 in the first protruding part 13, an opposite face 14a to the first protruding part 13 in the first reception part 14, a mating face 13b for the second protruding part 15 in the first protruding part 13, a mating face 15b for the first protruding part 13 in the second protruding part 15, an opposite face 15a to the second reception part 16 in the second protruding part 15, and an opposite face 16a to the second protruding part 15 in the second reception part 16.

Accordingly, when the piston ring 1 is attached into the ring groove on the piston outer circumferential face and receives load due to vertical motion of the piston, by the mating face 13b of the first protruding part 13 and the mating face 15b of the second protruding part 15 mated with each other in a width direction of the body 2 and by the crank C1 closed, gas passing through in a width direction of the piston ring 1 can be shut off.

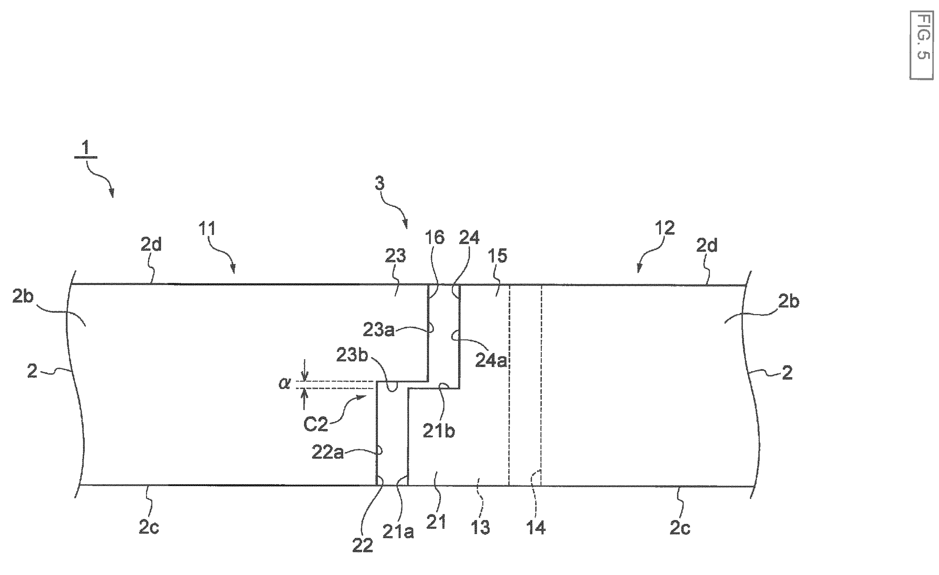

Moreover, in the piston ring 1, a position where the first male part 21 and the first female part 22 oppose each other on the inside surface 2c side of the body 2 and a position where the second male part 23 and the second female part 24 oppose each other on the peripheral surface 2d side of the body 2 are displaced from each other in the circumferential direction of the body. In this way, in the case of seeing the joint 3 from the side face 2b side, as shown in Figure 5, a crank C2 is formed of an opposite face 21a to the first female part 22 in the first male part 21, an opposite face 22a to the first male part 21 in the first female part 22, an opposite face 21b to the second male part 23 in the first male part 21, an opposite face 23b to the first male part 21 in the second male part 23, an opposite face 23a to the second female part 24 in the second male part 23, and an opposite face 24a to the second male part 23 in the second female part 24.

In the crank C2, the opposite face 21b to the second male part 23 in the first male part 21 and the opposite face 23b to the first male part 21 in the second male part 23 are hardly influenced by thermal expansion in use of the piston ring 1. Moreover, even when the load due to the vertical motion of the piston is exerted on the piston ring 1, the load is hardly exerted in an opposing direction of the opposite faces 21b and 23b and influence of abrasion is also small. Hence, a distance α between the opposite faces 21b and 23b can be maintained to be small. Accordingly, a flow area of gas through the crank C2 can be made as small as possible, which can suppress the gas having sneaked into the inside surface 2c side of the piston ring 1 from passing through the crank C2 to the peripheral surface 2d side.

Moreover, in this piston ring 1, the first protruding part 13 has a sectional area of the substantially half portion of the side face 2a side in the body 2, and the second protruding part 15 has a sectional area of the substantially half portion of the side face 2b side in the body 2. Moreover, since the first protruding part 13 protrudes more than the first female part 22 and the second male part 23 which are formed in the second reception part 16, the second male part 23 does not take a cantilever structure but is supported by the first protruding part 13. With such a structure, strength of the joint 3 can be sufficiently secured.

The present invention is not limited to the aforementioned embodiment. For example, while in the aforementioned embodiment, it is exemplarily presented that the body 2 is formed of metal, the body 2 of the piston ring 1 may be formed of synthetic resin or the like in the case of making more account of processing workability.

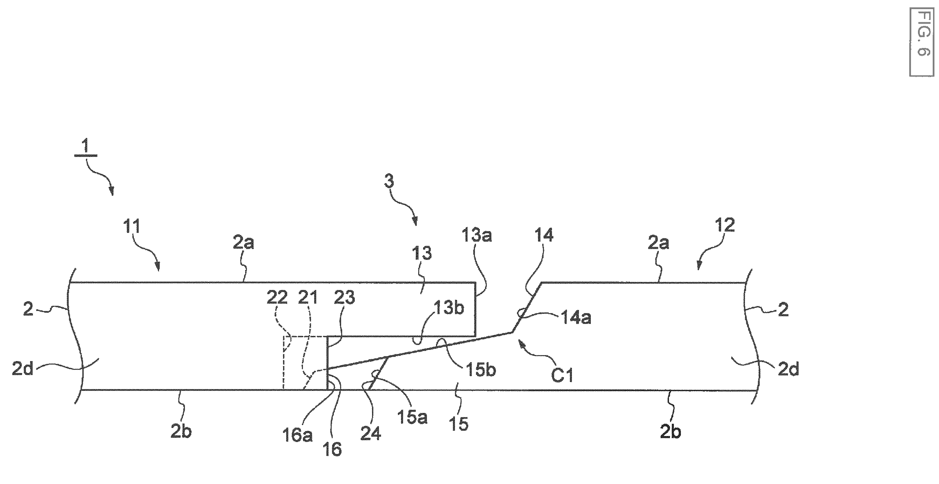

Moreover, while in the aforementioned embodiment, any of the sectional shapes of the first protruding part 13 and the second protruding part 15 are rectangular, for example, the second protruding part 15 may be formed into a shape as shown in Figure 6. Specifically, while maintaining the first protruding part 13 and the second reception part 16 in the rectangular sectional shapes, the mating face 15b for the first protruding part 13 in the second protruding part 15 may be inclined with respect to the mating face 13b for the second protruding part 15 in the first protruding part 13 in such a way that a width of the second protruding part 15 narrows toward a distal end side thereof.

In this case, since a length of the crank C1 can be more extended, pressure loss in the crank C1 becomes larger, which can more securely suppress the gas from passing through in the width direction of the piston ring 1. Moreover, since a basal end part of the second protruding part 15 becomes thicker, strength of the second protruding part 15 can be more secured.

Moreover, in the example of Figure 6, the opposite face 14a to the first protruding part 13 in the first reception part 14 is inclined with respect to the opposite face 13a to the first reception part 14 in the first protruding part 13, and the opposite face 15a to the second reception part 16 in the second protruding part 15 is inclined with respect to the opposite face 16a to the second protruding part 15 in the second reception part 16. In this way, contact of the opposite faces 13a and 14a with each other can be prevented and abrasion of the first protruding part 13 can be suppressed. Likewise, contact of the opposite faces 15a and 16a with each other can be prevented and abrasion of the second protruding part 15 can be suppressed.

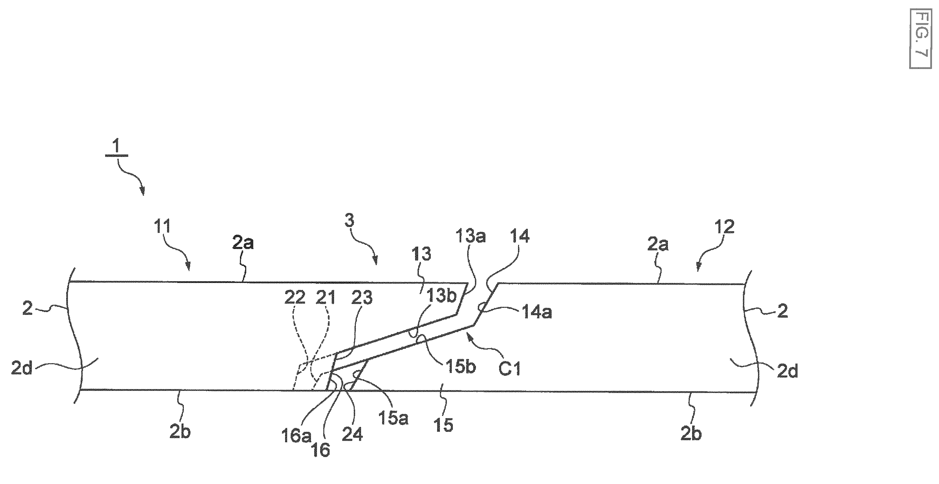

Furthermore, while in the example of Figure 6, the first protruding part 13 and the second reception part 16 are in the rectangular sectional shapes, as shown in Figure 7 by way of example, the mating face 13b for the second protruding part 15 in the first protruding part 13, the opposite face 13a to the first reception part 14 in the first protruding part 13, and the opposite face 16a to the second protruding part 15 in the second reception part 16 may be individually inclined with respect to the side faces 2a and 2b.

In this case, since the length of the crank C1 can be further extended, the gas can be further securely suppressed from passing through in the width direction of the piston ring 1. Moreover, since a basal end part of the first protruding part 13 becomes thicker, strength of the first protruding part 13 can be more secured. Notably, since a gas pressure is in balance in the width direction in use of the piston ring 1, the first protruding part 13 may be more or less smaller in strength than the second protruding part 15. Moreover, in Figure 7, it is preferable that both of the opposite faces 13a and 14a and the opposite faces 15a and 16a be not parallel to each other. In this way, contact of the opposite faces 13a and 14a with each other and contact of the opposite faces 15a and 16a with each other can be prevented and abrasion of the first protruding part 13 and the second protruding part 15 can be prevented.

### Industrial Applicability

The piston ring according to one aspect of the present invention can be used as a piston ring capable of excellently securing both strength and sealing ability, for example, of a joint.

### Reference Signs List

- 1: Piston ring

- 2: Body
- 2a: Side face (one side face side)
- 2b: Side face (the other side face side)
- 2c: Inside surface
- 2d: Peripheral surface
- 3: Joint
- 11: One butt end
- 12: The other butt end
- 13: First protruding part
- 13a: Opposite face
- 13b: Mating face
- 14: First reception part
- 14a: Opposite face
- 15: Second protruding part
- 15a: Opposite face
- 15b: Mating face
- 16: Second reception part
- 16a: Opposite face
- 21: First male part
- 21a and 21b: Opposite faces
- 22: First female par
- 22a: Opposite face
- 23: Second male part
- 23a and 23b: Opposite faces
- 24: Second female part
- 24a: Opposite face

## Claims

1. A piston ring comprising:
an annular body; and
a joint formed in the body, wherein
in the joint,
a first protruding part that protrudes from one butt end toward the other butt end and a first reception part that receives the first protruding part in the other butt end are provided on one side face side of the body,
a second protruding part that protrudes from the other butt end toward the one butt end and a second reception part that receives the second protruding part in the one butt end are provided on the other side face side of the body,
a first male part that protrudes from the second protruding part toward the second reception part and a first female part that receives the first male part in the second reception part are provided on an inside surface side of the body, and
a second male part that protrudes from the second reception part toward the second protruding part and a second female part that receives the second male part in the second protruding part are provided on an peripheral surface side of the body.

2. The piston ring according to Claim 1, wherein a mating face for the first protruding part in the second protruding part is inclined with respect to a mating face for the second protruding part in the first protruding part in such a way that a width of the second protruding part narrows toward a distal end side thereof.

3. The piston ring according to Claim 1 or 2, wherein an opposite face to the first protruding part in the first reception part is inclined with respect to an opposite face to the first reception part in the first protruding part.

4. The piston ring according to any one of Claims 1 to 3, wherein an opposite face to the second reception part in the second protruding part is inclined with respect to an opposite face to the second protruding part in the second reception part.

5. The piston ring according to any one of Claims 1 to 4, wherein the body is formed of metal.
